# EUROPEAN PATENT SPECIFICATION

(11) **EP 2 038 567 B1**
(45) Date of publication and mention of the grant of the patent: **24.03.2010**
(21) Application number: 07783479.4
(22) Date of filing: 09.05.2007
(51) Int. Cl.: F16H 7/08

(54) **CHECK VALVE WITH SPRING RETAINED BALL**
RÜCKSCHLAGVENTIL MIT DURCH EINE FEDER GEHALTENER KUGEL
CLAPET ANTI-RETOUR AVEC BILLE RETENUE PAR RESSORT

(30) Priority: 21.06.2006 US 805388 P
(43) Date of publication of application: 25.03.2009
(73) Proprietor: BorgWarner, Inc., Auburn Hills, MI 48326-2872 (US)
(72) Inventor: PALOMAKI, Eric, Genoa, New York 13071 (US); CHEKANSKY, Jason W., Auburn, New York 13021 (US); PENZONE JR., Robert, Lawrenceville, Pennsylvania 16929 (US); SMITH, Dale, Springwater, New York 14560 (US); MARKLEY, George L., Montour Falls, New York 14865 (US)
(74) Representative: Petruzziello, Aldo
(86) International application number: PCT/US2007/068517
(87) International publication number: WO 2007/149648

(56) References cited:
- EP-A2- 1 067 314
- DE-A1- 10 065 059
- DE-A1- 19 632 383
- DE-A1- 19 929 668

## Description

### BACKGROUND OF THE INVENTION

### FIELD OF THE INVENTION

The invention pertains to the field of check valves. More particularly, the invention pertains to a check valve with a spring retained ball, according to the preamble of claim 1 and as it is disclosed in DE 19632383 A.

### DESCRIPTION OF RELATED ART

Hydraulic tensioners are used to control excessive movement in a power transmission chain, or similar power transmission device, as the chain travels between a plurality of sprockets. In a power transmission system, power is transmitted by the continuous loop chain from a driving sprocket, such as the crankshaft, to one or more driven sprockets, such as those that operate the camshaft. During varying power demands, a portion of the chain will be tight and another portion of the chain will be slack. Engine torque fluctuations will also severely affect the tension experienced by the strands of the chain.

It is necessary to maintain a certain degree of tension in the chain to prevent noise, or slippage due to tooth jumping, when using a toothed chain. Prevention of such excessive movement is particularly important in the case of a chain driven camshaft, because the jumping of teeth on any of the sprockets may result in error associated with timing of the camshaft, potentially causing severe damage to the engine or complete inoperability of the engine.

Over prolonged use, wear experienced by the components of the power transmission system can cause a decrease in chain tension. Also, wide variations in the temperature and different coefficients of thermal expansion among the various parts of the engine can cause the chain tension to vary from excessively high to very low levels. Other factors that affect chain tension are torsional vibrations of the camshaft or the crankshaft or the reverse rotation of the engine, such as during the stopping of the engine or the failed attempts at starting the engine. For these reasons, a hydraulic tensioner is used to mitigate the excessive tension on the tight strand while ensuring that adequate tension is present on the slack strand of the chain.

Hydraulic tensioners are conventionally used in conjunction with a lever arm that pushes against the slack strand of the chain to tighten the strand. It must then retain rigidity when the chain tightens. A hydraulic tensioner typically contains a hollow piston housed within a cylindrically shaped bore of the housing. A pressure chamber is formed between the hollow piston and the bore of the housing. The pressure chamber is connected to an exterior reservoir of hydraulic fluid. The size of the pressure chamber changes with the movement of the piston in the housing. A spring is also located within the pressure chamber to bias the piston away from the housing. Check valves are used to regulate the flow of hydraulic fluid into and out of the pressure chamber when the pressure inside of the chamber has decreased, due to the movement of the piston towards the chain during slack conditions. When the pressure inside the pressure chamber rises, as a result of an increase in chain tension pushing back on the piston, the check valve closes, which prevents fluid from exiting the pressure chamber, and in turn prevents the piston from abruptly retracting away from the chain. A typical prior art check valve of a hydraulic tensioner includes a retainer, a ball, a biasing spring, a seat, and a seal.

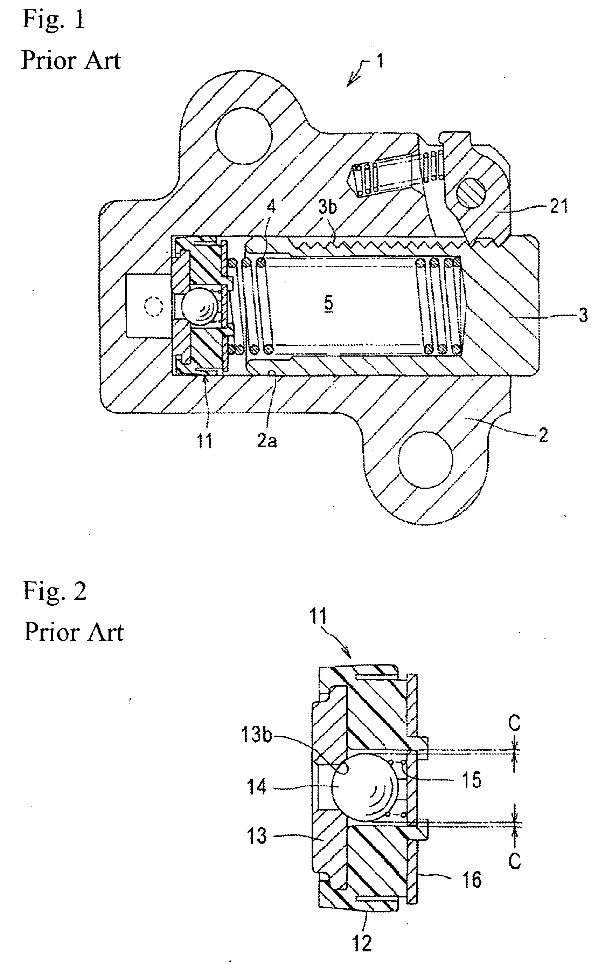

Prior art figures 1 and 2 show another example of a check valve 11 used with a hydraulic tensioner 1 is in Yoshida et al.'s US Patent Publication No. 2004/0266572. The hydraulic tensioner in Figure 1 has a plunger 3 slidable in a plunger receiving hole 2a formed in the housing 2. The plunger is hollow 3a with an opening at the rear end of the plunger. The hollow space receives a spring 4 which biases the plunger away from the housing. A rack 3b is formed on the outer peripheral surface of the plunger for engagement with the pawl 21. A high pressure oil chamber 5 is formed between the housing and the hollow space of the plunger. The chamber 5 is supplied with fluid from an external source through a check valve assembly 11.

The check valve assembly 11 includes a guide 12, a check ball 14, a ball seat attached to the guide 12 and having a seating surface 13b, and a check ball coil spring 15. The check ball coil spring 15 biases the check ball 14 towards seating surface 13b and retainer 16, attached to ball guide 12 for retaining check ball coil spring 15, limiting the stroke of the check ball 14.

The check ball coil spring 15 biases the check valve 14 onto the seating surface 13b of the ball seat 13. The spring does not produce tight contact between the ball and seat or exert a large force on the ball when the ball moves away from the seat and into contact with the flat stroke-limiting surface of the retainer. The check valve of Yoshida et al.'s US Patent Publication No. 2004/0266572 requires a separate, check ball coil spring 15 from the tensioner spring 4 to bias the check ball 14 towards the seating surface 13b, in addition to a retainer 16.

Suzaki's US Patent No. 4,822,320 shows another example of a check valve used with a hydraulic tensioner. The check valve includes a check ball biased towards a ball seat by a check ball spring, which abuts at one end against a retainer, permitting fluid flow into the hydraulic tensioner and blocking reverse oil flow.

JP 9-247311 shows examples of check valves used with hydraulic tensioners. The check valves all include a ball biased to block a passage by a check ball spring with one end abutting the ball and the other end abutting against a retainer.

EP 1 067 314 discloses a hydraulic chain tensioner comprising a pressure relief valve and an air disc vent that are integrally incorporated on the upper end of the tip of the plunger.

The pressure valve includes a valve housing with open holes on both its ends, a plug member fixed in the valve housing, a ball and a valve spring, placed between the fixed plug member and the ball to bias the ball into contact with a seat of the valve housing.

In all of the above prior art cheek valves, the complexity is high and multiple parts are required to assemble the check valve assembly within the hydraulic tensioner. Therefore, there is a need for a reduction in both complexity and quantity of parts associated with the check valve of the hydraulic tensioner.

### SUMMARY OF THE INVENTION

A hydraulic tensioner of the present invention includes a housing, a hollow plunger, a plunger biasing spring, an inlet passage, and a check valve assembly. The housing has a bore with a tapered end and an open end. The hollow plunger is slidably received within the bore and forms a fluid chamber. The plunger biasing spring has a first end and a second end. The first end of the spring contacts the inner end of the plunger and biases the plunger outward from the housing. The second end of the spring has a tang with a length extending in from the outer circumference of the spring blocking the tapered end of the bore. In one embodiment, the tapered end of the bore is the check valve seat in which a moveable sealing member seats and prevents the flow of fluid from the inlet passage connected to an external source of fluid to the fluid chamber. The tang of the second end of the plunger biasing spring retains and limits the travel of the moveable sealing member away from the check valve seat.

In another embodiment, the check valve seat is formed of a housing with angled sides that is dropped into a tapered bore. The moveable sealing member seats on the check valve seat and prevents the flow of fluid from the inlet passage to the fluid chamber of the tensioner.

Additionally, springs, such as a leaf spring, coil spring, or reed-type bias spring may be placed in between the tang of the second end of the plunger biasing spring and the check ball. The additional spring provides preload on the moveable sealing member, biasing the member into contact with the check valve seat. The tang limits and retains the travel of the moveable sealing member and the additional springs.

In any of the above embodiments, a portion of the last coil and the tang of the plunger biasing spring may be flat in order to increase the control contact between the tang and the moveable sealing member.

### BRIEF DESCRIPTION OF THE DRAWINGS

- Fig.: 1 shows a cross-sectional view of a prior art hydraulic tensioner.
- Fig. 2: shows a cross-sectional view of a prior art check valve assembly.
- Fig. 3: shows a perspective view of the check valve of the present invention.
- Fig. 4: shows a bottom perspective view of the check valve of the present invention.

- Fig. 5: shows a schematic of a sectional view of the check valve of the present invention.
- Fig. 6: shows larger view of the check valve assembly of Figure 5.
- Fig. 7: shows a schematic of a sectional view of the tensioner with a check valve of a second embodiment.
- Fig. 8: shows a larger view of the check valve assembly of Figure 7.
- Fig. 9a: shows a top down view of a reed of a check valve for a tensioner of a third embodiment of the present invention.
- Fig. 9b: shows a side view of a reed of a check valve for a tensioner of a third embodiment of the present invention.
- Fig. 10: shows a schematic of the check valve assembly of a tensioner of a third embodiment.
- Fig. 11: shows a schematic of a check valve assembly of a tensioner of a fourth embodiment.
- Fig. 12: shows a perspective view of a spring used with the check valve assembly of the fourth embodiment.
- Fig. 13: shows a schematic of a check valve assembly of a tensioner of a fifth embodiment.
- Fig. 14: shows a schematic of a check valve assembly of a tensioner of a sixth embodiment.

### DETAILED DESCRIPTION OF THE INVENTION

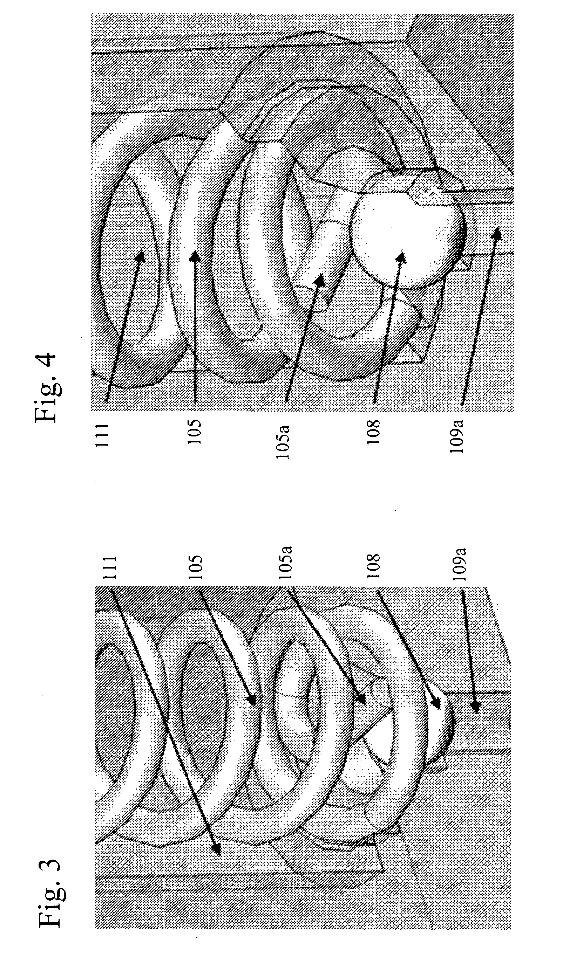

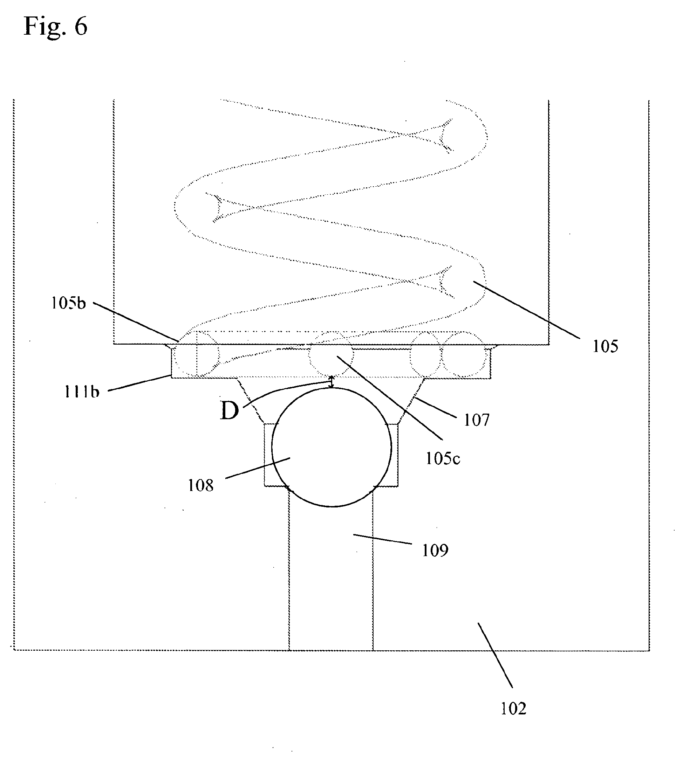

Figures 3-6 show a tensioner with a check valve assembly 106 of the first embodiment. The hydraulic tensioner 101 has a housing 102 with a bore 11 having an open end 111a and a tapered end 111b that receives a hollow plunger 103. A pressure chamber 104 is formed between the plunger 103 and the bore 111 of the housing 102. Within the pressure chamber 104 is a check valve assembly 106 and a plunger biasing spring 105 with a first end 105a and a second end 105b. The first end 105a of the spring abuts the inside end 103a of the plunger 103. The second end 105b of the plunger biasing spring 105 has an additional tang 105c of a length that extends in from the outer diameter of the spring, retaining and limiting the travel of a moveable sealing member, which may be check ball 108 from check ball seat 107 formed by the tapered end 111b of the bore 111 within the pressure chamber 104.

The check valve seat 107 in this embodiment is preferably integral with the housing 102 and consists of a seating surface 107 in which the check ball 108 seals against when the pressure inside the pressure chamber 104 is greater than the pressure in the external source of fluid S, blocking the flow of fluid from the external source of fluid S and inlet passage 109 and through the bore inlet hole 109a to the pressure chamber 104.

The tang 105c at the second end 105b of the plunger biasing spring 105 in conjunction with the integral seat geometry of the check valve seat 107 limits the travel of the check ball 108. The length of the tang 105c preferably extends at least past a centerline of the check ball 108. A space D is present between the check ball 108 and the tang 105c of the spring 105, when the check ball 108 is seated on the check valve seat 107. The tang 105c does not provide any preloading on the check ball 108, and as previously stated, the tang retains and limits the travel of the check ball relative to the check valve seat.

When the pressure of the external source of fluid S is greater than the pressure in the pressure chamber 104 formed between the bore 111 of the housing 102 and the plunger 103, the pressure from the external source S lifts the check ball 108 off of the check ball seat 107, towards the plunger biasing spring 105, allowing oil to flow into the chamber 104, providing makeup oil for the next tensioner stroke of the plunger 103. The tang 105c of the plunger biasing spring 105 limits the travel or lift of the check ball 108 away from the check valve seat 107.

By having the check ball seat 107 be integral with the housing 102 and consist of the tapered end 111b of the bore 111 in the chamber 104 formed between the bore 111 and the plunger 103, eliminates fluid lead paths and the need for a check valve seal.

When the pressure of the external source of fluid S is less than the pressure of fluid in the pressure chamber 104, the check ball 108 remains seated on the check valve seat 107 and fluid from the source S is blocked from passing through the bore inlet hole 109a to the pressure chamber 104.

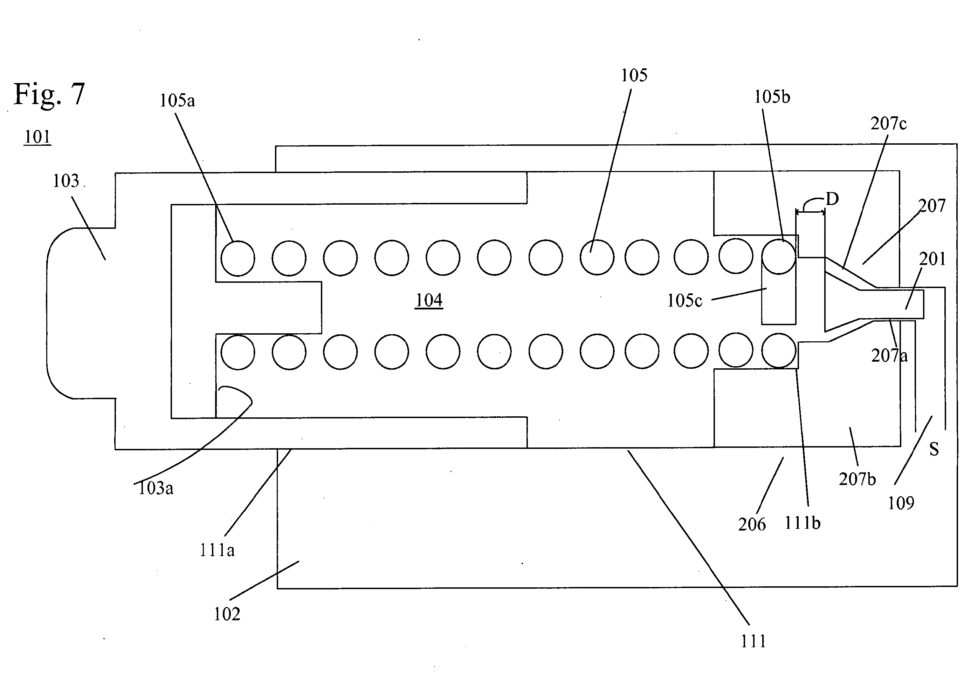

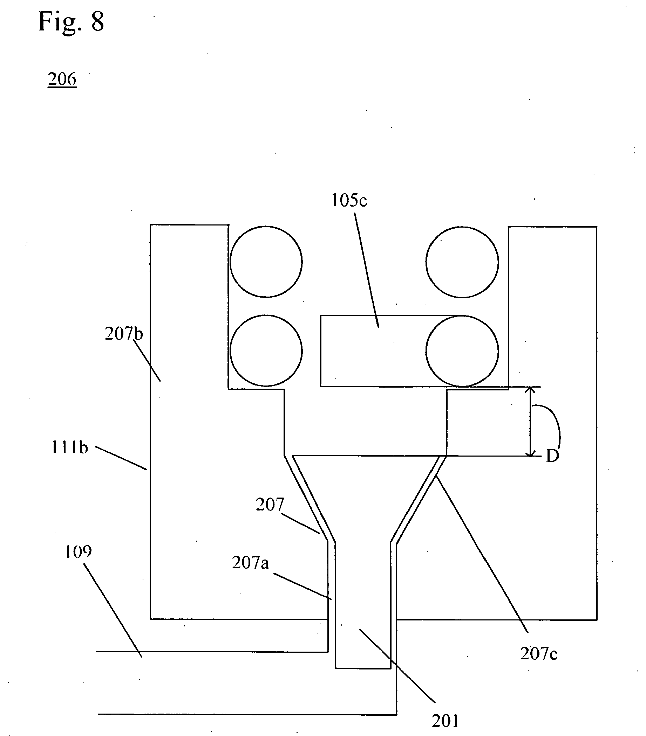

Figures 7 and 8 show a tensioner of a second embodiment with a drop in check valve assembly 206. The hydraulic tensioner 101 has a housing 102 with a bore having a first open end 111a and a second end 111b in fluid communication with an inlet passage 109. The second end 111b of the bore receives the drop in check valve assembly 206. A pressure chamber 104 is formed between the plunger 103 and the bore 111 of the housing 102. Within the pressure chamber 104 is the drop in check valve assembly 206 and a plunger biasing spring 105 with a first end 105a and a second end 105b. The first end 105a of the spring abuts the inside end 103a of the plunger. The second end 105b of the plunger biasing spring 105 has an additional tang 105c of a length that extends in from the outer diameter of the spring, retaining and limiting the travel of a moveable sealing member, which in this case is a conical poppet 201 from the check ball seat 207. The length of the tang 105c preferably extends at least past a center line of the check ball 208.

The drop in check valve assembly 206 consists of a housing 207b with an inlet bore 207a, having angled sides 207c at the second end of the bore 111b, with the inlet bore 207a being coupled to the fluid pressure chamber 104 and the other end of the inlet bore 207a coupled to the inlet passage 109. The angled sides 207c form the check valve seat in which the conical poppet 201 seats. The check valve seat 207 of the drop in check valve assembly 206 is preferably heat treated steel.

The tang 105c at the second end 105b of the plunger biasing spring 105, in conjunction with the check valve seat 207 defines travel limits of the conical poppet or moveable sealing member 201. A space D is present between the conical poppet 201 and the tang 105c of the spring 105 when the conical poppet 201 is seated on the check valve seat 207. The tang 105c does not provide any preloading on the conical poppet 201, and as previously stated, the tang 105c retains and limits the travel of the conical poppet 201 relative to the check valve seat.

When the pressure of the external source of fluid S is greater than the pressure in the pressure chamber 104 formed between the bore 111 of the housing 102 and the plunger 103, the pressure from the external source S moves the conical poppet 201 towards the inside end 103a of the plunger 103, lifting the conical poppet 201 away from the tapered sides 207c of the inlet bore 207a, towards the plunger biasing spring 105, allowing oil flow into the chamber 104, providing makeup oil for the next tensioner stoke of the plunger.

When the pressure of the external source of fluid S is less than the pressure in the pressure chamber 104, the conical poppet 201 remains seated on the check valve seat 207 and fluid from the source S is blocked from passing through the inlet bore 207a to the pressure chamber 104.

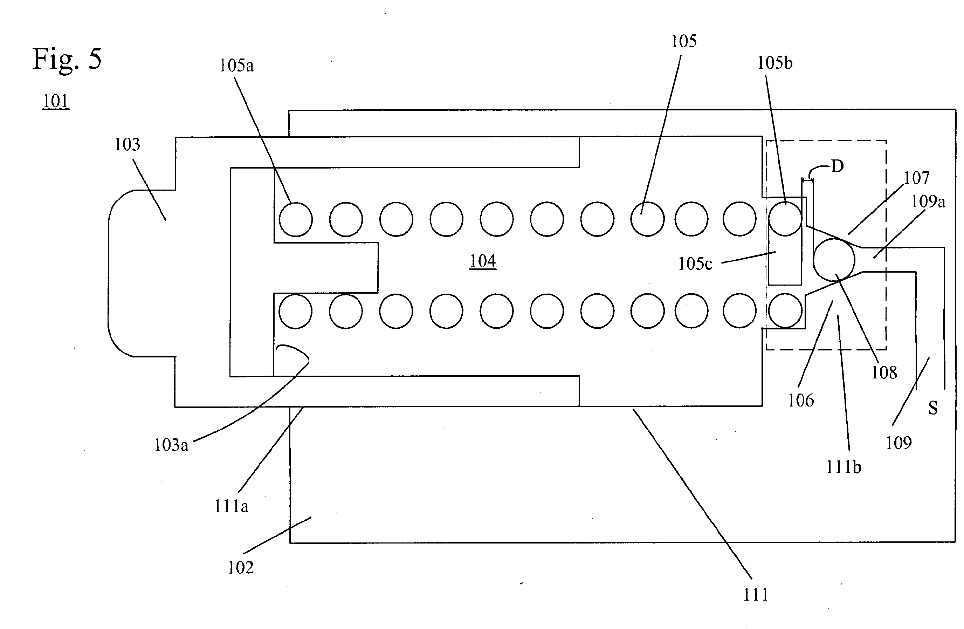

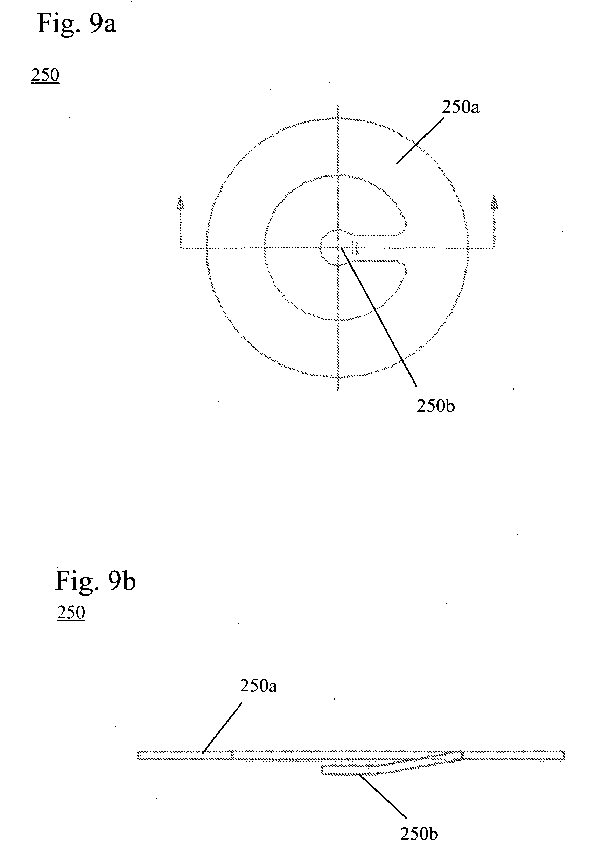

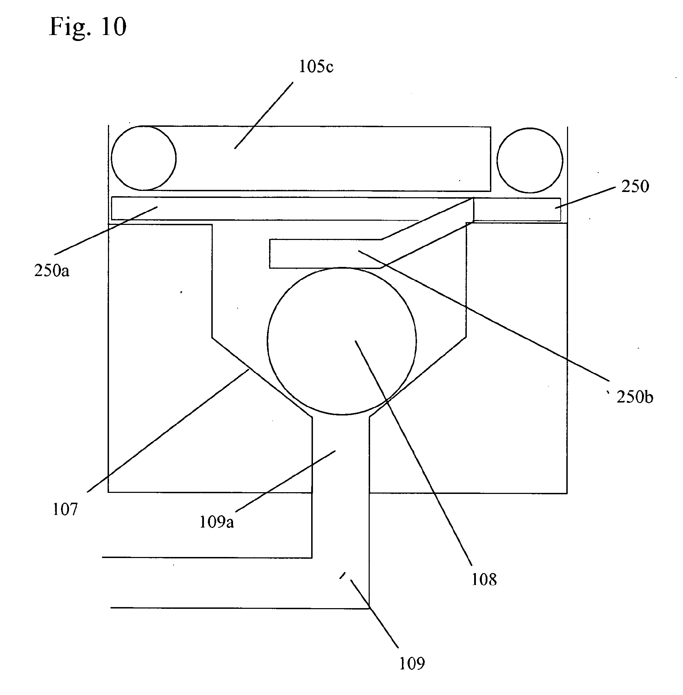

Referring to Figure 10, a reed-type bias spring 250 is inserted between the tang 105c of the plunger biasing spring 105 and the moveable sealing member or check ball 108 in a tensioner 101 similar to that shown in Figure 5 for a third embodiment. The reed-type bias spring 250 consists of an outer circumference 250a and a bent reed 250b protruding in from the outer circumference 250a as shown in Figures 9a and 9b. The reed-type bias spring 250 is held in place by placing the outer circumference 250a of the spring between the last coil of the bias plunger spring 105 and the bore 111 b of the housing 102. The reed-type bias spring 250 has a defined pop up pressure dependent on the spring force of the bent reed 250b. The bent reed 250b is bent downwards toward the check ball 108, preloading the check ball 108 with a positive pop up pressure.

When the pressure of the external source of fluid S is greater than the force of the bent reed 250b on the check ball 108 or the pop up pressure, the pressure from the external source S lifts the check ball 108 towards the plunger biasing spring 105, against the bent reed 250b and away from the check ball seat 207, allowing oil to flow into the pressure chamber 104, providing makeup oil for the next tensioner stoke of the plunger. The tang 105c aids in limiting the travel of the check ball 108 and the upward movement of the bent reed 250b. The reed-type biasing spring 250 prevents the check ball 108 from lifting off of the check valve seat 107 when any positive pressure below an established minimum occurs.

When the pressure of an external source of fluid S is less than the force of the bent reed 250b on the check ball 108 and the pressure in the pressure chamber 104, the check ball 108 remains seated on the check valve seat 107 and fluid from the source S is blocked from passing through the bore inlet hole 109a to the pressure chamber 104.

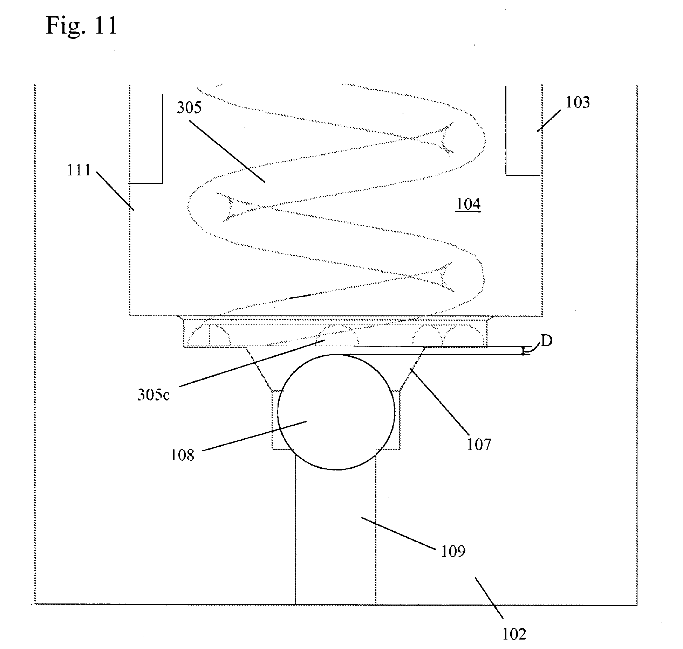

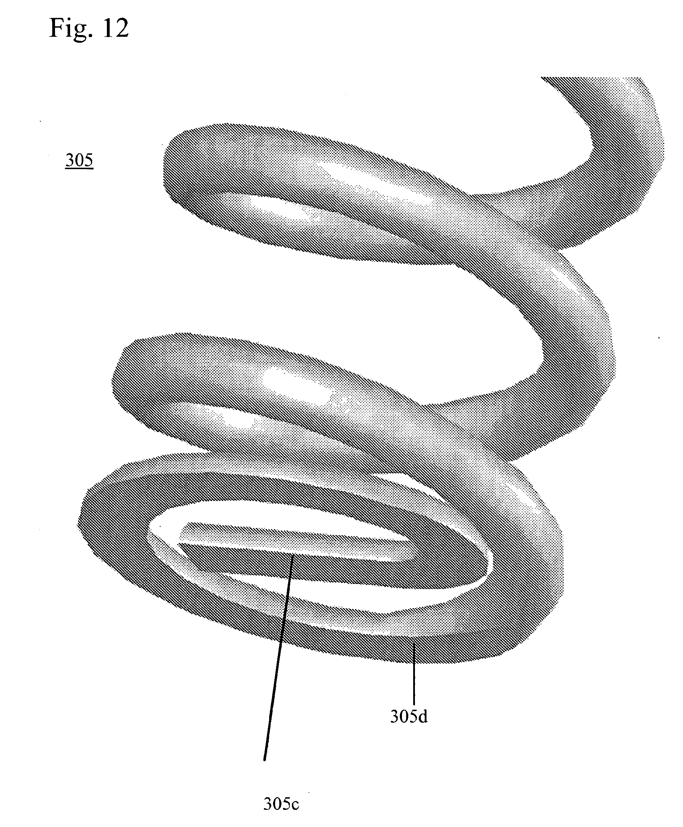

Figures 11 and 12 show a fourth embodiment of the present invention. In this embodiment, a portion of the last coil 305d, including the tang 305c, extending in from the outer diameter of the plunger biasing spring 305, is flat. This may be achieved by grinding or other similar means. By flattening a portion of the last coil 305d, including the tang 305c, an increased amount of control is provided for the contact between the check ball 108 and the flattened portion of plunger biasing spring 305. The plunger bias spring 305 may be present in a tensioner 101 similar to that shown in Figure 5.

The check valve seat 107 in this embodiment is preferably integral with the housing 102 and consists of a seating surface 107 in which the moveable sealing member or check ball 108 seals against when the pressure inside the pressure chamber 104 is greater than the pressure in the external source of fluid S, blocking the flow of fluid from the external source of fluid S and inlet passage 109 and through the bore inlet hole 109a to the pressure chamber 104. Alternatively, the check valve seat may be part of a drop in assembly as in the second embodiment and shown in Figures 7 and 8.

The tang 305c of the plunger biasing spring 305 in conjunction with the integral seat geometry of the check valve seat 107 limits the travel of the check ball 108. The length of the tang 305c preferably extends at least past a centerline of the check ball 308. A space D is present between the check ball 108 and the tang 305c of the spring 305, when the check ball 108 is seated on the check valve seat 107. The tang 305c does not provide any preloading on the check ball 108, and as previously stated, the tang 305c retains and limits the travel of the check ball 108 relative to the check valve seat 107.

When the pressure of the external source of fluid S is greater than the pressure in the pressure chamber 104 formed between the bore 111 of the housing 102 and the plunger 103, the pressure from the external source S lifts the check ball 108 off of the check ball seat 107, towards the plunger biasing spring 305, allowing oil to flow into the chamber 104, providing makeup oil for the next tensioner stroke of the plunger 103. The tang 305c of the plunger biasing spring 305 limits the travel or lift of the check ball 108 away from the check valve seat 107.

When the pressure of the external source of fluid S is less than the pressure of fluid in the pressure chamber 104, the check ball 108 remains seated on the check valve seat 107 and fluid from the source S is blocked from passing through the bore inlet hole 109a to the pressure chamber 104.

A portion of the last coil of the plunger biasing spring may be flattened in any of the embodiments in the present application in order to increase the control contact between the tang and the check ball.

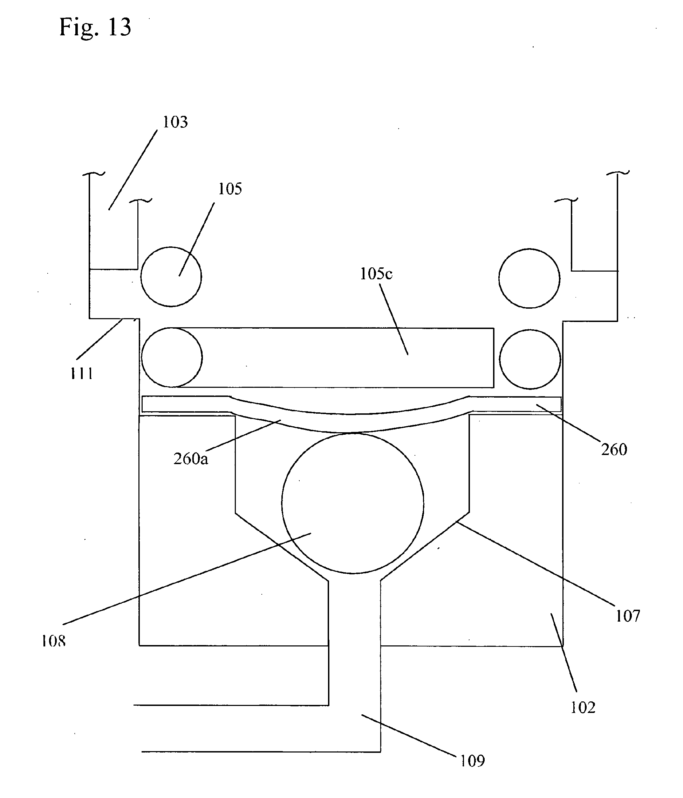

Figure 13 shows a fifth embodiment of the present invention in which a leaf spring is inserted between the tang 105c of the plunger biasing spring 105 and the moveable sealing member or check ball 108 in a tensioner 101 similar to that shown in Figure 5. The ends of the leaf spring 260 are held in place between the bore 111 of the housing and the plunger bias spring 105. The leaf spring 260 has a defined pop up pressure dependent on the spring force. A portion 260a of the leaf spring 260 biases or preloads the check ball 108 towards the check valve seat 108. The check valve seat 108 in this embodiment is shown with an integral seat similar to Figure 5, but may also be part of a drop in check valve assembly as in Figures 7 and 8.

When the pressure of the external source of fluid S is greater than the force of the leaf spring 260 on the check ball 108, the pressure from the external source S lifts the check ball 108 towards the plunger biasing spring 105, against the portion 260a of the leaf spring 260 and away from the check ball seat 107, allowing oil to flow into the pressure chamber 104, providing makeup oil for the next tensioner stoke of the plunger. The tang 105c aids in limiting the travel of the check ball 108 and the upward movement of the portion 260a of the leaf spring 260. The leaf spring 260 prevents the check ball 108 from lifting off of the check valve seat 107 when any positive pressure below an established minimum occurs.

When the pressure of an external source of fluid S is less than the force of the leaf spring 260 on the check ball 108 and the pressure in the pressure chamber 104, the check ball 108 remains seated on the check valve seat 107 and fluid from the source S is blocked from passing through the bore inlet hole 109a to the pressure chamber 104.

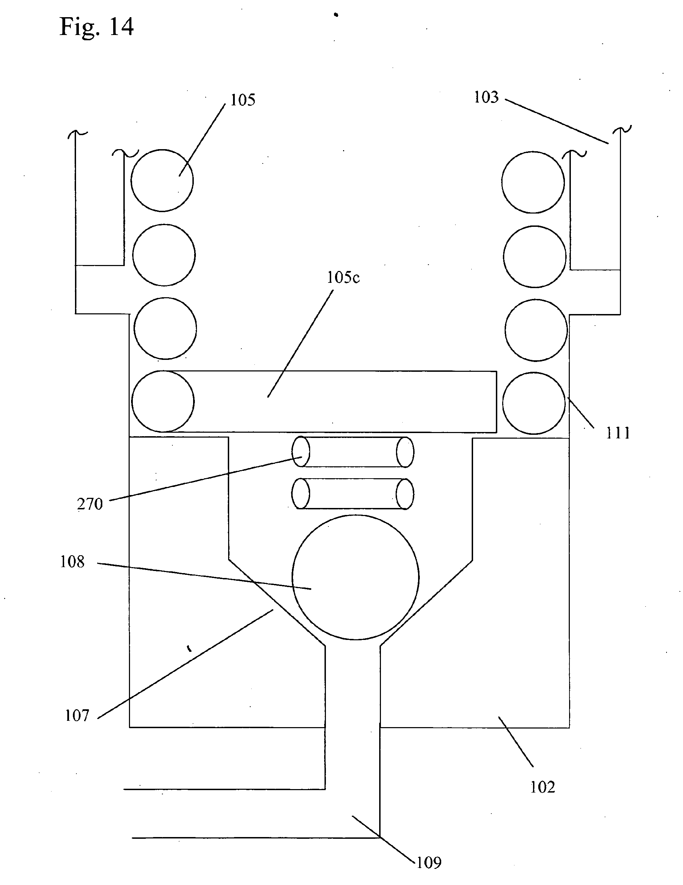

Figure 14 shows a sixth embodiment of the present invention, in which a coil spring 270 is inserted between the tang 105c of the plunger biasing spring 105 and the moveable sealing member or check ball 108 in a tensioner 101 similar to that shown in Figure 5. The coil spring 270 biases or preloads the check ball 108 towards the check valve seat 107. The check valve seat 108 in this embodiment is shown with an integral seat similar to Figure 5, but may also be part of a drop in check valve assembly as in Figures 7 and 8.

When the pressure of the external source of fluid S is greater than the force of the coil spring 270 on the check ball 108, the pressure from the external source S lifts the check ball 108 towards the plunger biasing spring 105, against the coil spring 270 and away from the check ball seat 107, allowing oil to flow into the pressure chamber 104, providing makeup oil for the next tensioner stoke of the plunger. The tang 105c aids in limiting the travel of the check ball 108 and the movement or compression of the coil spring 270. The coil spring 270 prevents the check ball 108 from lifting off of the check valve seat 107 when any positive pressure below an established minimum occurs.

When the pressure of an external source of fluid S is less than the force of the coil spring 270 on the check ball 108 and the pressure in the pressure chamber 104, the check ball 108 remains seated on the check valve seat 107 and fluid from the source S is blocked from passing through the bore inlet hole 109a to the pressure chamber 104.

While the check ball was shown as round, other shapes may be used as a moveable sealing member to block the flow of fluid from the external source S into the pressure chamber 104.

The moveable sealing member is a structure capable of adequately seating on the valve seat to prevent fluid from entering the pressure chamber of the tensioner and capable of moving away from the valve seat, allowing makeup fluid into the pressure chamber as necessary for the next stroke of the plunger. The moveable sealing member is not limited to the shapes shown.

Accordingly, it is to be understood that the embodiments of the invention herein described are merely illustrative of the application of the principles of the invention.

## Claims

1. A hydraulic tensioner comprising:
a housing **(102)** having a bore **(111)** with an open end **(111a)** and a **second** tapered end **(111b);**
a hollow plunger **(103)** slidably received within the bore **(111),** forming a fluid pressure chamber **(104)** with the bore **(111)** of the housing **(102);**
a plunger biasing spring **(105, 305)** having a first end **(105a)** and a second end **(105b),** the first end **(105a)** of the plunger biasing spring **(105, 305)** in contact with the plunger **(103),** biasing the plunger **(103)** in an outward direction from the bore **(111);**
an inlet passage **(109)** extending from an external source of fluid **(S)** to the fluid pressure chamber (**104**) through the second tapered end **(111b)** of the bore **(111);** and
a check valve assembly **(106, 206)** within the fluid chamber **(104)** comprising: a check valve seat **(107, 207)** and formed by the second tapered end of the bore (**11**) a moveable sealing member **(108, 201, 208)** for mating with the check valve seat **(107, 207),** preventing fluid from flowing from the external source **(S)** into the fluid chamber **(104)**; and wherein when pressure of the external source of fluid **(S)** is greater than pressure in the fluid pressure chamber **(104)** formed between the plunger **(103)** and the bore **(111)** of the housing **(102),** the moveable sealing member **(108, 201, 208)** lifts off of the check valve seat **(107, 207),** allowing fluid from the external source of fluid **(S)** to flow through the inlet passage **(109)** and the second end **(111b)** of the bore **(111)** to the fluid pressure chamber **(104),** providing fluid for the plunger's next stroke
**characterized in that:**
the second end (**105b**) of the plunger biasing spring (**105, 305**) has a tang (**105c, 305c**) of a length extending in from an outer diameter of the plunger biasing spring (**105, 305**);
wherein the tang **(105c, 305c)** retains and limits travel of the moveable sealing member **(108, 201, 208)**.

2. The tensioner of claim **1,** wherein the length of the tang **(105c, 305c)** extends at least past a centerline of the moveable sealing member **(108, 201, 208).**

3. The tensioner of claim **1,** wherein the tang **(105c, 305c)** does not preload the moveable sealing member **(108, 201).**

4. The tensioner of claim **1,** wherein the tang **(105c, 305c)** and a portion of a coil **(305d)** on the second end **(105b)** of the plunger biasing spring **(105, 305)** are flat.

5. The tensioner of claim **4,** wherein the tang **(105c, 305c)** and portion of the coil **(305d)** on the second end **(105b)** of the plunger biasing spring **(105, 305)** that are flat are formed by grinding.

6. The tensioner of claim **1,** further comprising a reed-type biasing spring **(250)** having an outer circumference **(250a)** and a bent reed **(250b)** extending in from the outer circumference **(250a)** between the second end **(105b)** of the plunger biasing spring **(105, 305)** and the moveable sealing member **(108, 201, 208),** the bent reed **(250b)** preloading the moveable sealing member **(108, 201, 208)** into contact with the check valve seat **(107, 207)** when pressure of the external source of fluid **(S)** is less than pressure in the fluid pressure chamber **(104)** and spring force of the bent reed **(250b).**

7. The tensioner of claim **6,** wherein the tang **(105c, 305c)** retains and limits travel of the bent reed **(250b).**

8. The tensioner of claim **1,** further comprising a leaf spring **(260)** between the second end **(105b)** of the plunger biasing spring **(105, 305)** and the moveable sealing member **(108, 201, 208),** preloading the moveable sealing member **(108, 201, 208)** into contact with the check valve seat **(107, 207)** when pressure of the external source of fluid **(S)** is less than pressure in the fluid pressure chamber **(104)** and spring force of the leaf spring **(260).**

9. The tensioner of claim **8,** wherein the tang **(105c, 305c)** of the second end of the plunger biasing spring **(105, 305)** retains and limits travel of the leaf spring **(260).**

10. The tensioner of claim **1,** further comprising a coil spring **(270)** between the second end **(105b)** of the plunger biasing spring **(105, 305)** and the moveable sealing member **(108, 201, 208),** preloading the moveable sealing member **(108, 201, 208)** into contact with the check valve seat **(107, 207)** when pressure of the external source of fluid **(S)** is less than pressure in the fluid pressure chamber **(104)** and spring force of the coil spring **(270).**

11. The tensioner of claim **10**, wherein the tang (**105c, 305c**) of the second end of the plunger biasing spring (**105, 305**) retains and limits movement or compression [travel] of the coil spring **(270).**

12. The tensioner of claim **1**, wherein the moveable sealing member **(108, 208)** is round.

13. The tensioner of claim **1,** wherein the moveable sealing member **(201)** is a conical poppet having angles sides at a first end to mate with the angles sides of the inlet bore **(111).**

14. The tensioner of claim **1**, wherein the check valve assembly is a drop in check valve assembly (**206**) within the fluid chamber (**104**) and the second end (**111b**) of the bore (**111**).

15. The tensioner of claim **16**, wherein said drop in check valve assembly (**206**) comprises a housing (**207b**) having an inlet bore (**207a**) with angled sides coupled to the fluid pressure chamber (**104**) at a first end forming the check valve seat (**207**) and the inlet passage (**109**) at a second end.

16. The tensioner of claim **1**, wherein the tang (**105c, 305c**) of the second end of the plunger biasing spring (**105, 305**) directly retains and limits travel of the moveable sealing member (**108, 201, 208**).

17. The tensioner of claim **1**, wherein the tang (**105c, 305c**) of the second end of the plunger biasing spring (**105, 305**) indirectly retains and limits travel of the moveable sealing member (**108, 201, 208)** through a reed-type bias spring (**250**), a leaf spring ( **260**) or a coil spring (**270**).

## Patentansprüche

1. Hydraulische Spannvorrichtung, die Folgendes umfasst:
ein Gehäuse (102), das eine Bohrung (111) mit einem offenen Ende (111a) und einem zweiten, sich verjüngenden Ende (111 b) aufweist;
einen hohlen Kolben (103), der verschiebbar in der Bohrung (111) aufgenommen ist und eine Fluiddruckkammer (104) mit der Bohrung (111) des Gehäuses (102) bildet;
eine Kolbenvorspannfeder (105, 305) mit einem ersten Ende (105a) und einem zweiten Ende (105b), wobei das erste Ende (105a) der Kolbenvorspannfeder (105, 305) mit dem Kolben (103) in Kontakt steht und den Kolben (103) in einer nach außen verlaufenden Richtung von der Bohrung (111) vorspannt;
einen Einlasskanal (109), der sich von einer externen Fluidquelle (S) zu der Fluiddruckkammer (104) durch das zweite, sich verjüngende Ende (111b) der Bohrung (111) erstreckt; und
eine Rückschlagvenfiilanordnung (106, 206) in der Fluidkammer (104), die einen Rückschlagventilsitz (107, 207), der durch das zweite, sich verjüngende Ende der Bohrung (111) gebildet wird, und ein bewegliches Dichtungsglied (108, 201, 208) zum Zusammenfügen mit dem Rückschlagventilsitz (107, 207), wodurch verhindert wird, dass Fluid von der externen Quelle (S) in die Fluidkammer (104) strömt, umfasst,
und wobei, wenn Druck in der externen Fluidquelle (S) größer ist als Druck in der Fluiddruckkammer (104), die zwischen dem Kolben (103) und der Bohrung (111) des Gehäuses (102) gebildet wird, das bewegliche Dichtungsglied (108, 201, 208) von dem Rückschlagventilsitz (107, 207) abgehoben wird, wodurch Fluid von der externen Fluidquelle (S) durch den Einlasskanal (109) und das zweite Ende (131b) der Bohrung (111) zu der Fluiddruckkammer (104) strömen kann, wodurch Fluid für den nächsten Kolbenhub bereitgestellt wird,
**dadurch gekennzeichnet, dass**
das zweite Ende (105b) der Kolbenvorspannfeder (105, 305) einen Finger (105c, 305c) mit einer Länge aufweist, die sich von einem Außendurchmesser der Kolbenvorspannfeder (105, 305) nach innen erstreckt,
wobei der Finger (105c, 305c) das bewegliche Dichtungsglied (108, 201, 208) festhält und seinen Hub begrenzt.

2. Spannvorrichtung nach Anspruch 1, wobei sich die Länge des Fingers (105c, 305c) mindestens an der Mittellinie des beweglichen Dichtungsglieds (108, 201, 208) vorbei erstreckt.

3. Spannvorrichtung nach Anspruch 1, wobei der Finger (105c, 305c) das bewegliche Dichtungsglied (108, 201) nichtvorbelastet.

4. Spannvorrichtung nach Anspruch 1, wobei der Finger (105c, 305c) und ein Teil einer Spule (305d) am zweiten Ende (105b) der Kolbenvorspannfeder (105, 305) flach sind.

5. Spannvorrichtung nach Anspruch 4, wobei der Finger (105c, 305c) und ein Teil der Spule (305d) am zweiten Ende (105b) der Kolbenvorspannfeder (105, 305), die flach sind, durch Schleifen hergestellt werden.

6. Spannvorrichtung nach Anspruch 1, die weiterhin eine Zungen-Vorspannfeder (250) mit einem Außenumfang (250a) und einer gebogenen Zunge (250b), die sich von dem Außenumfang (250a) zwischen dem zweiten Ende (105b) der Kolbenvorspannfeder (105, 305) und dem beweglichen Dichtungsglied (108, 201, 208) nach innen erstreckt, umfasst, wobei die gebogene Zunge (250b) das bewegliche Dichtungsglied (108, 201, 208) in Kontakt mit dem Rückschlagventilsitz (107, 207) vorbelastet, wenn Druck der externen Fluidquelle (S) kleiner ist als der Druck in der Fluiddruckkammer (104) und die Federkraft der gebogenen Zunge (250b).

7. Spannvorrichtung nach Anspruch 6, wobei der Finger (105c, 305c) die gebogene Zunge (250b) festhält und ihren Hub begrenzt.

8. Spannvorrichtung nach Anspruch 1, die weiterhin eine Blattfeder (260) zwischen dem zweiten Ende (105b) der Kolbenvorspannfeder (105, 305) und dem beweglichen Dichtungsglied (108, 201, 208) umfasst, die das bewegliche Dichtungsglied (108, 201, 208) in Kontakt mit dem Rückschlagventilsüz (107, 207) vorspannt, wenn Druck der externen Fluidquelle (S) kleiner ist als der Druck in der Fluiddruckkammer (104) und die Federkraft der Blattfeder (260).

9. Spannvorrichtung nach Anspruch 8, wobei der Finger (105c, 305c) des zweiten Endes der Kalbenvorspannfecler (105, 305) die Blattfeder (260) festhält und ihren Hub begrenzt.

10. Spannvorrichtung nach Anspruch 1, die weiterhin eine Schraubenfeder (270) zwischen dem zweiten Ende (105b) der Kolbenvorspannfieder (105, 305) und dem beweglichen Dichtungsglied (108, 201, 208) umfasst, die das bewegliche Dichtungsglied (108, 201, 208) in Kontakt mit dem Rückschlagventilsitz (107, 207) vorbelastet, wenn Druck der externen Fluidquelle (S) kleiner ist als der Druck in der Fluidkammer (104) und die Federkraft der Schraubenfeder (270).

11. Spannvorrichtung nach Anspruch 10, wobei der Finger (105c, 305c) das zweite Ende der Kolbenvorspannfeder (105, 305) festhält und eine Bewegung oder Komprimierung (einen Hub) der Schraubenfeder (270) begrenzt.

12. Spannvorrichtung nach Anspruch 1, wobei das bewegliche Dichtungsglied (108, 208) rund ist.

13. Spannvorrichtung nach Anspruch 1, wobei das bewegliche Dichtungsglied (201) ein konischer Teller mit Winkelseiten an einem ersten Ende ist, um mit den Winkelseiten der Einlassbohrung (111) in Eingriff gebracht zu werden.

14. Spannvorrichtung nach Anspruch 1, wobei die Rückschlagventilanordnung eine einsetzbare Rückschlagventilanordnung (206) in der Fluidkammer (104) und dem zweiten Ende (111 b) der Bohrung (111) ist.

15. Spannvorrichtung nach Anspruch 16, wobei die einsetzbare Rückschlagventilanordnung (206) ein Gehäuse (207b) mit einer Einlassbohrung (207a) mit abgewinkelten Seiten umfasst, die an einem den Rückschlagventilsitz (207) bildenden ersten Ende mit der Fluiddruckkammer (104) und an einem zweiten Ende mit dem Einlasskanal (109) gekoppelt ist.

16. Spannvorrichtung nach Anspruch 1, wobei der Finger (105c, 305c) des zweiten Endes der Kolbenvorspannfieder (105, 305) das bewegliche Dichtungsglied (108, 201, 208) direkt festhält und seinen Hub begrenzt.

17. Spannvorrichtung nach Anspruch 1, wobei der Finger (105c, 305c) des zweiten Endes der Kolbenvorspannfieder (105, 305) das bewegliche Dichtungsglied (108, 201, 208) durch eine Zungen-Vorspannfeder (250), eine Blattfeder (260) oder eine Schraubenfeder (270) indirekt festhält und seinen Hub begrenzt.

## Revendications

1. Dispositif de tensionnement hydraulique comprenait:
un boîtier (102) ayant un alésage (111) avec une extrémité ouverte (111a) et une deuxième extrémité effilée (111b) ;
un plongeur creux (103) reçu à coulissement dans l'alésage (111), formant une chambre de pression de fluide (104) avec l'alésage (111) du boîtier (102) ;
un ressort de poussée du plongeur (105, 305), ayant une première extrémité (105a) et une deuxième extrémité (105b), la première extrémité (105a) du ressort de poussée du plongeur (105, 305) en contact avec le plongeur (103) poussant le plongeur (103) dans une direction vers l'extérieur depuis l'alésage (111) ;
un passage d'entrée (109) s'étendant depuis une source externe de fluide (S) jusqu'à la chambre de pression de fluide (104) à travers la deuxième extrémité effilée (111b) de l'alésage (111) ; et
un ensemble de clapet de non retour (106, 206) dans la chambre de fluide (104) comprenant :
un siège de clapet de non retour (107, 207) et, formé par la deuxième extrémité effilée de l'alésage (111), un organe d'étanchéité déplaçable (108, 201, 208) destiné à s'accoupler avec le siège du clapet de non retour (107, 207), empêchant le fluide de s'écouler de la source externe (S) dans la chambre de fluide (104) ; et
dans lequel lorsque la pression de la source externe de fluide (S) est supérieure à la pression dans la chambre de pression de fluide (104) formée entre le plongeur (103) et l'alésage (111) du boîtier (102), l'organe d'étanchéité déplaçable (108, 201, 208) se soulève du siège du clapet de non retour (107, 207) en permettant au fluide de la source externe de fluide (S) de s'écouler à travers le passage d'entrée (109) et la deuxième extrémité (111b) de l'alésage (111) jusqu'à la chambre de pression de fluide (104), en fournissant du fluide pour la course suivante du plongeur,
**caractérisé en ce que**
la deuxième extrémité (105b) du ressort de poussée du plongeur (105, 305) a un tenon (105c, 305c) d'une longueur s'étendant depuis un diamètre extérieur du ressort de poussée du plongeur (105, 305) ;
dans lequel le tenon (105c, 305c) retenant et limitant la course de l'organe d'étanchéité déplaçable (108, 201, 208).

2. Dispositif de tensionnement selon la revendication 1, dans lequel la longueur du tenon (105c, 305c) s'étend au moins au-delà d'un axe central de l'organe d'étanchéité déplaçable (108, 201, 208).

3. Dispositif de tensionnement selon la revendication 1, dans lequel le tenon (105c, 305c) ne précontraint pas l'organe d'étanchéité déplaçable (108, 201).

4. Dispositif de tensionnement selon la revendication 1, dans lequel le tenon (105c, 305c) et une portion d'un enroulement (305d) sur la deuxième extrémité (105b) du ressort de poussée du plongeur (105, 305) sont plats.

5. Dispositif de tensionnement selon la revendication 4, dans lequel le tenon (105c, 305c) et une portion de l'enroulement (305d) sur la deuxième extrémité (105b) du ressort de poussée du plongeur (105, 305) qui sont plats sont formés par meulage.

6. Dispositif de tensionnement selon la revendication 1, comprenant en outre un ressort de poussée de type à tiges (250) ayant une circonférence externe (250a) et une tige recourbée (250b) s'étendant depuis la circonférence extérieure (250a) entre la deuxième extrémité (105b) du ressort de poussée du plongeur (105, 305) et l'organe d'étanchéité déplaçable (108, 201, 208), la tige recourbée (250b) précontraignant l'organe d'étanchéité déplaçable (108, 201, 208) en contact avec le siège du clapet de non retour (107, 207) lorsque la pression de la source externe de fluide (S) est inférieure à la pression dans la chambre de pression de fluide (104) et à la force de ressort de la tige recourbée (250b).

7. Dispositif de tensionnement selon la revendication 6, dans lequel le tenon (105c, 305c) retient et limite la course de la tige recourbée (250b).

8. Dispositif de tensionnement selon la revendication 1, comprenant en outre un ressort à lame (260) entre la deuxième extrémité (1 05b) du ressort de poussée du plongeur (105, 305) et l'organe d'étanchéité déplaçable (108, 201, 208), précontraignant l'organe d'étanchéité déplaçable (108, 201, 208) en contact avec le siège du clapet de non retour (107, 207) lorsque la pression de la source externe de fluide (S) est inférieure à la pression dans la chambre de pression de fluide (104) et à la force de ressort du ressort à lame (260).

9. Dispositif de tensionnement selon la revendication 8, dans lequel le tenon (105c, 305c) de la deuxième extrémité du ressort de poussée du plongeur (105, 305) retient et limite la course du ressort à lame (260).

10. Dispositif de tensionnement selon la revendication 1, comprenant en outre un ressort à boudin (270) entre la deuxième extrémité (105b) du ressort de poussée du plongeur (105, 305) et l'organe d'étanchéité déplaçable (108, 201, 208), précontraignant l'organe d'étanchéité déplaçable (108, 201, 208) en contact avec le siège du clapet de non retour (107, 207) quand la pression de la source externe de fluide (S) est inférieure à la pression dans la chambre de pression de fluide (104) et à la force de ressort du ressort à boudin (270).

11. Dispositif de tensionnement selon la revendication 10, dans lequel le tenon (105c, 305c) de la deuxième extrémité du ressort de poussée du plongeur (105, 305) retient et limite le mouvement ou la compression (course) du ressort à boudin (270).

12. Dispositif de tensionnement selon la revendication 1, dans lequel l'organe d'étanchéité déplaçable (108, 208) est rond.

13. Dispositif de tensionnement selon la revendication 1, dans lequel l'organe d'étanchéité déplaçable (201) est un champignon conique ayant des côtés angulaires à une première extrémité de manière à s'accoupler avec les côtés angulaires de l'alésage d'entrée (111).

14. Dispositif de tensionnement selon la revendication 1, dans lequel l'ensemble de clapet de non retour est un ensemble de clapet de non retour à insertion (206) dans la chambre de fluide (104) et la deuxième extrémité (111b) de l'alésage (111).

15. Dispositif de tensionnement selon la revendication 16, dans lequel ledit ensemble de clapet de non retour à insertion (206) comprend un boîtier (207b) ayant un alésage d'entrée (207a) avec des côtés angulaires accouplé à la chambre de pression de fluide (104) à une première extrémité formant le siège du clapet de non retour (207) et au passage d'entrée (109) à une deuxième extrémité.

16. Dispositif de tensionnement selon la revendication 1, dans lequel le tenon (105c, 305c) de la deuxième extrémité du ressort de poussée du plongeur (105, 305) retient directement et limite la course de l'organe d'étanchéité déplaçable (108, 201, 208).

17. Dispositif de tensionnement selon la revendication 1, dans lequel le tenon (105c, 305c) de la deuxième extrémité du ressort de poussée du plongeur (105, 305) retient indirectement et limite la course de l'organe d'étanchéité déplaçable (108, 201, 208) par le biais d'un ressort de poussée du type à tiges (250), d'un ressort à lame (260) ou d'un ressort à boudin (270).
